# EUROPÄISCHE PATENTANMELDUNG

(11) **EP 0 829 651 A2**
(43) Veröffentlichungstag der Anmeldung: **18.03.1998**
(21) Anmeldenummer: 97115489.3
(22) Anmeldetag: 08.09.1997
(51) Int. Cl.: F16B 21/10

(54) **Vorrichtung zur Übertragung einer Kraft vom einem ersten ring- oder zylinderförmigen Bauteil auf ein zweites ring- oder zylinderförmiges Bauteil**

(30) Priorität: 12.09.1996 DE 19637048
(71) Anmelder: ABB PATENT GmbH, 68309 Mannheim (DE)
(72) Erfinder: Eggers, Joachim, 63456 Hanau (DE); Riel, Ralf, 63796 Kahl (DE)
(74) Vertreter: Rupprecht, Klaus, Dipl.-Ing.

(57) **Zusammenfassung**

Die Erfindung betrifft eine Vorrichtung zur Übertragung einer Kraft von einem ersten ring- oder zylinderförmigen Bauteil (10) auf ein zweites ring- oder zylinderförmiges Bauteil (16). Das erste Bauteil (10) besitzt auf der dem zweiten Bauteil (16) zugewandten Zylinderfläche eine umlaufende Nut (12). In diese Nut ist die Leiste (13) eines aus wenigstens zwei sich zu einem Ring ergänzenden Ringabschnitten gebildeten Kraftübertragungsgliedes (14) einfügbar, an dessen der Leiste (13) radial entgegengesetzten Seite eine Konusfläche (15) angeformt ist. Das Kraftübertragungsglied (14) ist an das zweite Bauteil, an dem ebenfalls eine an die Konusfläche des Kraftübertragungsgliedes (14) angepaßte Konusfläche (17) angeformt ist, so einander zugeordnet sind, daß sich die Konusflächen (15, 17) gegeneinander pressen.

## Beschreibung

Die Erfindung betrifft eine Vorrichtung gemäß dem Oberbegriff des Anspruches 1.

In bestimmten Anwendungen ist es notwendig, eine ringförmige Kraft, die auf ein erstes Bauteil wirkt, auf ein zylinderförmiges oder ringförmiges zweites Bauteil zu übertragen. Eine solche Anordnung ist beispielsweise dann erforderlich, wenn sich eine ringförmige Druckfeder, die ein ring- oder zylinderförmiges Bauteil umgibt oder sich in einem solchen befindet, auf jenes Bauteil übertragen werden muß, weil sich die Feder an diesem Bauteil abstützt. Eine Anwendung einer derartigen Kraftübertragung ist beispielsweise bei hydraulischen Federkraftantrieben für Hochspannungsschaltgeräte erforderlich.

Aufgabe ist es demgemäß, eine Vorrichtung der eingangs genannten Art zu schaffen, bei der eine ringförmige Kraft auf einfache Weise auf ein ringförmiges Bauteil übertragen werden kann.

Diese Aufgabe wird erfindungsgemäß gelöst durch die kennzeichnenden Merkmale des Anspruches 1.

Dabei bestehen zwei Möglichkeiten: zum einen kann das erste Bauteil von dem zweiten Bauteil umgeben sein. In diesem Fall besitzt das erste Bauteil an seiner Außenfläche eine umlaufende Nut, in die ein Kraftübertragungsglied eingreift, an dem die Konusfläche angeformt ist; das zweite Bauteil legt sich mit seiner Konusfläche an der Konusfläche des Kraftübertragungsgliedes an. Damit das Kraftübertragungsglied montierbar ist, wird es in wenigstens zwei Ringhälften aufgeteilt, die mit der Leiste von außen in die Nut eingelegt werden. Aufgrund der Konusfläche werden die Ringhälften oder Ringabschnitte zusammengehalten.

Bei einer weiteren Ausführungsform besitzt das erste Baute an seiner Innenfläche eine umlaufende Nut, in die radiale Leisten eines Kraftübertragungsgliedes eingesetzt sind; zur Montage ist auch hier das Kraftübertragungsglied in mehrere Ringabschnitte unterteilt. Das Kraftübertragungsglied besitzt eine Konusfläche, die mit der Konusfläche am zweiten Bauteil zusammenwirkt; durch Eingreifen der Leiste des Kraftübertragungsgliedes in die Nut in Verbindung mit der Konusfläche werden die Ringabschnitte an dem ersten Bauteil gehalten.

Die Konusfläche besitzt in beiden Fällen einen Konuswinkel von ca. 45° bezogen auf die Mittelachse; es hat sich herausgestellt, daß dieser Winkel optimal ist. Ist der Konuswinkel spitzer, dann wird sich das zweite Bauteil verformen; wenn es außerhalb des zweiten Bauteiles sich befindet, erweitert es sich und wenn es innerhalb des ersten Bauteils sich befindet, dann wird es gestaucht. In beiden Fällen ist wegen der Reibschlüssigkeit zwischen den Konusflächen eine Demontage kaum mehr möglich. Ist der Konuswinkel stumpfer, d. h. größer als 45°, dann wird die Flächenpressung zwischen den Berührungsflächen zu groß und das Kraftübertragungsglied wird im Bereich der Leiste im wesentlichen auf Scherung belastet.

Zur Krafteinleitung in das zweite Bauteil ist ein Krafteinleitungselement vorgesehen, das mit seiner Stirnfläche gegen die Stirnfläche des zweiten Bauteils anliegt; zwischen beiden ist ein Kraftübertragungsdraht vorgesehen, der zur besseren Führung in sich gegenüberliegenden Nuten der Stirnflächen eingelegt ist.

Selbstverständlich besteht die Möglichkeit, das Krafteinleitungselement wegzulassen und direkt die Kraft auf das zweite Bauteil wirken zu lassen. Beispielsweise kann die Kraft von einer Feder erzeugt werden; diese Feder drückt direkt auf das zweite Bauteil. Auch hier ist ein solcher Kraftübertragungsdraht sinnvoll, mit dem die Kraft der Feder oder Federanordnung exakt eingeleitet werden kann.

Es hat sich als vorteilhaft erwiesen, wenn der Kraftübertragungsdraht sich in dem Ringbereich befindet, der durch eine Projektion der Konusflächen auf eine radiale Ebene definiert ist. Befindet sich der Kraftübertragungsdraht nicht im Bereich dieser Ringfläche, dann treten beim zweiten Bauteil Stülpmomente auf, die auch zu einer ungünstigen Verformung und Verlagerung des Kraftübertragungsdrahtes führen.

Weitere vorteilhafte Ausgestaltungen der Erfindung sind den weiteren Unteransprüchen zu entnehmen.

Anhand der Zeichnung, in der zwei Ausführungsbeispiele der Erfindung dargestellt sind, sollen die Erfindung sowie weitere vorteilhafte Verbesserungen der Erfindung und weitere Vorteile näher erläutert und beschrieben werden.

Es zeigen:
- Fig. 1: eine schematische Teilschnittansicht einer ersten Ausführungsform der Erfindung, und
- Fig. 2: eine schematische Teilschnittansicht einer zweiten Ausführungsform der Erfindung.

Gemäß einer ersten Ausführungsform der Erfindung ist ein erstes ringförmiges Bauteil 10 vorgesehen, auf dessen Außenfläche 11 eine umlaufende Nut 12 eingebracht ist. In diese umlaufende Nut ist eine radiale Leiste 13 eines Kraftübertragungsgliedes 14 vorgesehen, welches im Querschnitt L-förmig ist; die radial nach innen vorspringende Leiste 13 bildet dabei einen Schenkel der L-Querschnittsform. Das Kraftübertragungsglied 14 ist in zwei Ringabschnitte geteilt, die jeweils als Ringhälften ausgebildet sind. Selbstverständlich kann das Kraftübertragungsglied 14 auch in drei oder mehr Ringabschnitte unterteilt sein. Wesentlich ist, daß sich diese Ringabschnitte zu einem geschlossenen Kreisring ergänzen, wenn sie montiert sind.

Das Kraftübertragungsglied 14 besitzt eine Konusfläche 15, die mit der Mittelachse MM einen Winkel von ca. 45° bildet. Um das Kraftübertragungsglied 14 ist ein zweites, ringförmiges Bauteil 16 gelegt, welches eine Konusfläche 17 aufweist, die der Konusfläche 15 entspricht und gegen die die Konusfläche 15 des ersten Bauteiles 14 zum Anliegen kommt oder umgekehrt. Auf der Stirnfläche 18 des zweiten Bauteils 16, die der Konusfläche 17 axial entgegengesetzt liegt, ist eine rillenförmige Nut 19 angebracht.

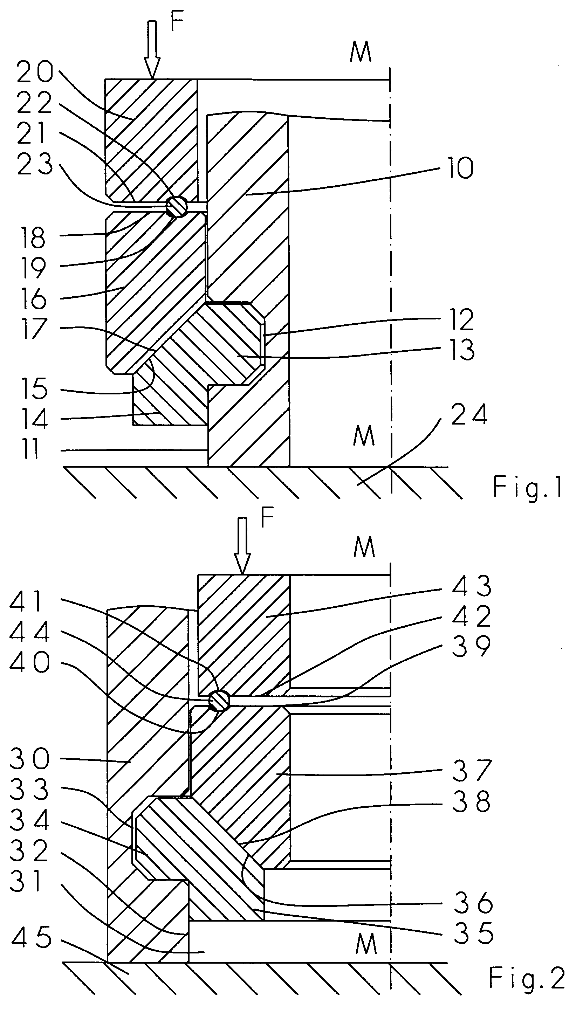

Bei der in Fig. 1 dargestellten Anordnung ist in zweckmäßiger Weise die Konusfläche so angeordnet, daß sie sich in die Richtung erweitert, in der sich das zweite Bauteil unter der Wirkung einer Druckkraft 11 (siehe weiter unten) bewegen würde. Auf diese Weise hält das zweite Bauteil 16 die Ringabschnitte oder Ringhälften zusammen, da das zweite Bauteil 16 diese Ringabschnitte teilweise entlang der Konusfläche 15, 17 außen umgibt.

Zur Übertragung der Kraft ist ein ringförmiges Krafteinleitungselement 20 vorgesehen, dessen Stirnfläche 21 ebenfalls eine umlaufende rillenförmige Nut 22 aufweist; zwischen diesen Nuten befindet sich ein ringförmiger Kraftübertragungsdraht 23.

Anstatt ein ringförmiges Krafteinleitungselement 20 kann auch ein solche Einrichtung, die die Kraft direkt erzeugt, beispielsweise eine Federanordnung, auf das Bauteil 16 einwirken, wobei der ringförmige Kraftübertragsdraht 23 dann sinnvoll ist, wenn es sich bei der Federanordnung um ein Tellerfederpaket handelt.

Auf das Krafteinleitungselement 20 wirkt eine ringförmige Druckkraft F, die über den Kraftübertragungsdraht 23 auf das zweite Bauteil 16 und über die Konusfläche 17 auf die Konusfläche 15 und damit auf das Kraftübertragungsglied 14 einwirkt. Dadurch ergibt sich eine radiale Kraftkomponente, die das Kraftübertragungsglied 14 nach innen drückt und eine axiale Kraftkomponente, mit der die Leiste 13 auf Scherung belastet ist. Das erste Bauteil 10 legt sich gegen einen ortsfesten Anschlag 24 an.

Es besteht selbstverständlich auch die Möglichkeit, daß das erste Bauteil 10 an der entgegengesetzten Stelle befestigt ist, so daß der Bereich zwischen der Befestigungsstelle und dem Kraftübertragungsglied 14 auf Zug beansprucht wird, wogegen bei der Anordnung nach Fig. 1 der Bereich des ersten Bauteiles 10 zwischen dem Kraftübertragungsglied 14 und dem Anschlag 23 auf Druck belastet ist.

Die Projektion der Konusflächen 17, 15 auf eine radiale Ebene ergibt eine radiale Ringfläche; im Bereich dieser radialen Ringfläche befindet sich der Kraftübertragungsdraht 23. Würde dieser Draht 23 außerhalb dieser Ringfläche liegen, dann würde das zweite Bauteil 16 mit einer Stülpbelastung beaufschlagt, wodurch sich eine ungeeignete Verformung sowohl des zweiten Bauteils 16 als auch des Kraftübertragungsdrahtes 23 ergibt.

Wenn der Kraftübertragungsdraht 23 nicht vorhanden wäre, was ebenfalls denkbar wäre, dann würde gleichwohl dafür zu sorgen sein, daß die resultierende Kraft, die auf das zweite Bauteil 16 einwirkt, innerhalb der radialen Ringfläche liegt, damit eine Stülpbelastung des zweiten Bauteiles 16 vermieden wird.

Die Fig. 2 zeigt eine Variante. Dabei befindet sich das erste Bauteil 30 außerhalb und ist zylinderförmig und umgibt eine Zylinderbohrung 31. An der Innenfläche 32 des ersten Bauteils 30 befindet sich eine umlaufende Nut 33, in die eine radial nach außen vorspringende Leiste 34 eines Kraftübertragungsglied 35 eingesetzt ist, welches ebenfalls in vorzugsweise vier Ringabschnitte unterteilt ist, die sich im montierten Zustand zu einem Ring ergänzen.

Die einzelnen Ringabschnitte sind dann so zu schneiden und voneinander zu trennen, daß wenigstens der als letzte montierte Ringabschnitt gerade in den noch verbleibenden Zwischenraum eingepaßt werden kann. Hierbei wären die Schnittkanten parallel zueinander und nicht radial. Die Anzahl der Ringabschnitte ist bestimmt durch die Montierbarkeit.

Das Kraftübertragungsglied 35 besitzt eine Konusfläche 36, die der Konusfläche 15 entspricht und ebenfalls mit der Mittelachse M-M einen Winkel von 45° einnimmt.

Dem zweiten Bauteil 16 entsprechend ist ein zweites Bauteil 37 vorgesehen, welches an seinem Außenrand eine Konusfläche 38 aufweist, die an die Konusfläche 36 angepaßt ist. An der der Konusfläche 38 entgegengesetzten axialen Stirnfläche 39 besitzt das zweite Bauteil 37 eine Rille 40, die sich mit einer Rille 41 auf der Stirnfläche 42 eines inneren Krafteinleitungselementes 43 zu einem etwa kreisförmigen Kanal ergänzt, in dem ein Kraftübertragungsdraht 44 eingelegt ist. Auf das Krafteinleitungsglied 43, welches sich ringförmig innerhalb des Zylinders 30 befindet, wirkt eine Kraft F, die über den Kraftübertragungsdraht 44 das zweite Bauteil 37, die Konusflächen 38, 36 auf das Kraftübertragungsglied 35 überträgt und über die radiale Leiste 34 auf den das erste Bauteil 30. Dieses liegt gegen einen ortsfesten Anschlag 45 an.

Bei der Ausführung nach Fig. 2 ist das zweite Bauteil innerhalb des Kraftübertragungsgliedes 35 und die Konusflächen 36, 38 sind so gewählt, daß eine Resultierende der an den Konusflächen 36, 38 wirkenden Kräfte radial nach außen gerichtet ist; bei der Anordnung nach Fig. 1 ist eine derartige Kraftkomponente radial nach innen zum ersten Bauteil hingerichtet.

Auch hier gilt, daß der Kraftübertragungsdraht 44 in dem Bereich liegen soll, der durch die auf eine radiale Ebene erzeugte Projektion der Konusflächen 38, 36 erzeugten Kreisring liegen.

Für bestimmte Zwecke ist die Anordnung gemäß Fig. 1 sinnvoll, z. B. bei Anwendung der Vorrichtung auf einen hydraulischen Antrieb für einen Leistungsschalter, bei dem als Energiespeicher eine Federanordnung vorgesehen ist, die entweder eine Schraubenfeder oder eine Tellerfederanordnung ist.

## Patentansprüche

1. Vorrichtung zur Übertragung einer Kraft von einem ersten ring- oder zylinderförmigen Bauteil auf ein zweites ring- oder zylinderförmiges Bauteil, dadurch gekennzeichnet, daß das erste Bauteil (10, 30) auf der dem anderen zugewandten Zylinderfläche eine umlaufende Nut (12, 33) aufweist, daß in die Nut (12, 33) die Leiste eines aus wenigstens zwei sich zu einem Ring ergänzenden Ringabschnitten gebildeten Kraftübertragungsglied (14, 35) einfügbar ist, an dessen der Leiste (14, 35) radial entgegengesetzter Seite eine Konusfläche (15) angeformt ist, und daß das Kraftübertragungsglied (14, 35) an das zweite Bauteil (16, 37), an dem ebenfalls eine an die Konusfläche des Kraftübertragungsgliedes (14, 35) angepaßte Konusfläche (17, 38) angeformt ist, so einander zugeordnet ist, daß sich die Konusflächen gegeneinander pressen.

2. Vorrichtung nach Anspruch 1, dadurch gekennzeichnet, daß zur Krafteinleitung ein Krafteinleitungselement (20, 43) vorgesehen ist, dessen radiale Stirnfläche gegen die radiale Stirnfläche des zweiten Bauteils (16, 37) drückt.

3. Vorrichtung nach Anspruch 2, dadurch gekennzeichnet, daß zwischen dem Krafteinleitungselement (20, 43) und dem zweiten Bauteil (16, 37) ein Kraftübertragungsdraht (23, 24) vorgesehen ist, der in einer umlaufenden Rille sowohl des Krafteinleitungselementes als auch des zwieten Bauteils aufgenommen ist.

4. Vorrichtung nach Anspruch 3, dadurch gekennzeichnet, daß der Durchmesser des Krafteinleitungsdrahtes sich in dem auf eine radiale Ebene projizierten Bereich der konischen Berührungsfläche befindet.

5. Vorrichtung nach Anspruch 4, dadurch gekennzeichnet, daß die Konusflächen einen Konuswinkel von ca. 45° bezogen auf die Mittelachse des ersten oder zweiten Bauteiles aufweisen.

6. Vorrichtung nach einem der vorherigen Ansprüche, dadurch gekennzeichnet, daß die Nut des ersten Bauteils auf dessen Außenumfang angeordnet ist und daß das zweite Bauteil das erste umgibt.

7. Vorrichtung nach einem der Ansprüche 1 bis 5, dadurch gekennzeichnet, daß die Nut auf der Innenfläche des ersten Bauteiles vorgesehen ist und daß das zweite Bauteil sich innerhalb des ersten Bauteiles sich befindet.

8. Vorrichtung nach einem der vorherigen Ansprüche, dadurch gekennzeichnet, daß zur Bildung des Kraftübertragungsgliedes wenigstens zwei Ringabschnitte vorgesehen sind, die sich zu einem Ring ergänzen.

9. Vorrichtung nach einem der vorherigen Ansprüche, dadurch gekennzeichnet, daß das Krafteinleitungsglied (20, 43) ein Krafterzeugungsglied, beispielsweise eine Federanordnung, ist.
